# EUROPEAN PATENT APPLICATION

(11) **EP 1 367 764 A2**
(43) Date of publication of application: **03.12.2003**
(21) Application number: 03250783.2
(22) Date of filing: 07.02.2003
(51) Int. Cl.: H04L 9/08

(54) **Encryption device and encryption method**

(30) Priority: 31.05.2002 JP 2002160395
(71) Applicant: FUJITSU LIMITED, Kawasaki-shi, Kanagawa 211-8588 (JP)
(72) Inventor: Kosaki, Makoto, c/o Fujitsu VLSI Limited, Kasugai-shi, Aichi 487-0013 (JP)
(74) Representative: Stebbing, Timothy Charles

(57) **Abstract**

An encryption device includes an encryption/decryption circuit (42) for encrypting and decrypting data with a secret key (61). A non-volatile memory (43) is connected to the encryption/decryption circuit (42) to store the secret key (61) in an encrypted state (45). The encryption/decryption circuit (42) receives the encrypted secret key (45) from the non-volatile memory (43) and decrypts the encrypted secret key to generate the secret key (61).

## Description

The present invention relates to an encryption device and an encryption method.

Household appliances, such as audio equipment, use digital input/output signals. For copyright protection, a household appliance, such as a digital versatile disc (DVD) player incorporates an encryption processor to encrypt and decrypt input/output signals. When performing encryption and decryption, the encryption processor uses a secret key, which must be stored and protected.

The encryption processor of, for example, a DVD player encrypts an image signal, which is read from an optical disc, and outputs an encrypted image signal. The encryption processor of a video tape recorder decrypts an input signal and records the decrypted signal. In this manner, the encryption of signals between household appliances prevents illegal copying and protects copyrights.

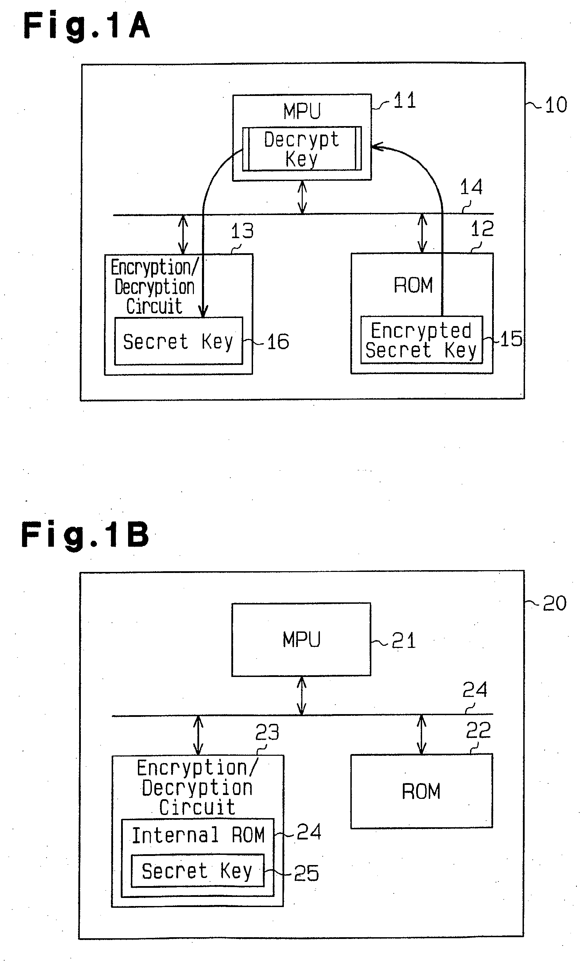

Fig. 1A is a schematic block diagram showing a first example of a prior art encryption processor 10. The encryption processor 10 includes a microprocessor (MPU) 11, a ROM 12, and an encryption/decryption circuit 13, which are connected to one another by a bus 14. An encrypted secret key 15 is stored in the ROM 12.

The MPU 11 executes a recovery program, which is stored in the MPU 11 or in the ROM 12, to read the encrypted secret key 15 from the ROM 12. The MPU 11 decrypts the secret key 15 and generates a secret key 16, which is sent to the encryption/decryption circuit 13. The encryption/decryption circuit 13 encrypts data with the decrypted secret key 16 and outputs the encrypted data. Further, the encryption/decryption circuit 13 decrypts input data with the secret key 16.

However, in the first prior art example, commands that are executed by the MPU 11 may be analyzed by monitoring the bus 14 or reading the contents of the ROM 12. Thus, there is a possibility of the encrypted secret key 16 being broken.

Fig. 1B is a schematic block diagram showing a second example of a prior art encryption processor 20. The encryption processor 20 includes an MPU 21, a ROM 22, and an encryption/decryption circuit 23.

The encryption/decryption circuit 23 has a rewritable internal ROM section (e.g., EEPROM) 24, in which a secret key 25 is stored. The encryption/decryption circuit 23 uses the secret key 25 to encrypt or decrypt data.

In the second prior art example, the internal ROM section 24 is included in the encryption/decryption circuit 23. This increases manufacturing costs and may cause problems that lower reliability. Further, if the secret key 25 is read only from the internal ROM section 24, the secret key 25 cannot be rewritten.

It is desirable to provide an encryption device, electronic device, and encryption method that enable secure storage and usage of a secret key.

According to one aspect of the present invention there is provided an encryption device including an encryption/decryption circuit for encrypting and decrypting data with a secret key. A non-volatile memory is connected to the encryption/decryption circuit to store the secret key in an encrypted state. The encryption/decryption circuit receives the encrypted secret key from the non-volatile memory and decrypts the encrypted secret key to generate the secret key.

According to another aspect of the present invention there is provided an electronic device including an encryption device. The encryption device includes an encryption/decryption circuit for encrypting and decrypting data with a secret key. A non-volatile memory is connected to the encryption/decryption circuit to store the secret key in an encrypted state. The encryption/decryption circuit receives the encrypted secret key from the non-volatile memory and decrypts the encrypted secret key to generate the secret key.

According to another aspect of the present invention there is provided a method for encrypting and decrypting predetermined data in an encryption device including an encryption/decryption circuit and a non-volatile memory for storing a secret key in an encrypted state. The method includes transferring the encrypted secret key from the non-volatile memory to the encryption/decryption circuit, providing the encryption/decryption circuit with a key decryption command, decrypting the encrypted secret key with the encryption/decryption circuit in response to the key decryption command to generate the secret key, and performing at least one of encryption and decryption of the predetermined data with the decrypted secret key.

According to another aspect of the present invention there is provided a method for processing a secret key with an encryption/decryption circuit and a non-volatile memory. The secret key is used to encrypt and decrypt data, and the non-volatile memory stores the secret key in an encrypted state. The method includes transferring the encrypted secret key from the non-volatile memory to the encryption/decryption circuit, providing the encryption/decryption circuit with a key decryption command, and decrypting the encrypted secret key with the encryption/decryption circuit in response to the key decryption command to generate the secret key.

According to another aspect of the present invention there is provided a method for processing a secret key with an encryption/decryption circuit and a non-volatile memory, wherein the secret key is used to encrypt and decrypt data, and the non-volatile memory stores the secret key in an encrypted state. The method includes providing the encryption/decryption circuit with the secret key that is not encrypted, providing the encryption/decryption circuit with a key encryption command, encrypting the secret key in response to the key encryption command with the encryption/decryption circuit to generate the encrypted secret key, and storing the encrypted secret key in the non-volatile memory.

Reference will now be made, by way of example, to the accompanying drawings, in which:
Figs. 1A and 1B are schematic diagrams illustrating examples of prior art encryption processors;
Fig. 2 is a schematic diagram illustrating an optical disc device incorporating an encryption processing circuit according to a first embodiment of the present invention;
Fig. 3 is a schematic diagram illustrating the encryption processing circuit of Fig. 2;
Fig. 4 is a schematic diagram illustrating an encryption/decryption circuit of the encryption processing circuit shown in Fig. 3;
Fig. 5 is an explanatory diagram illustrating the procedures for encrypting a secret key with the encryption processing circuit of Fig. 3;
Fig. 6 is an explanatory diagram illustrating the procedures for decrypting a secret key with the encryption processing circuit of Fig. 3;
Fig. 7 is a schematic diagram illustrating an encryption processing circuit according to a second embodiment of the present invention; and
Fig. 8 is a schematic diagram illustrating a further electronic device.

In the drawings, like numerals are used for like elements throughout.

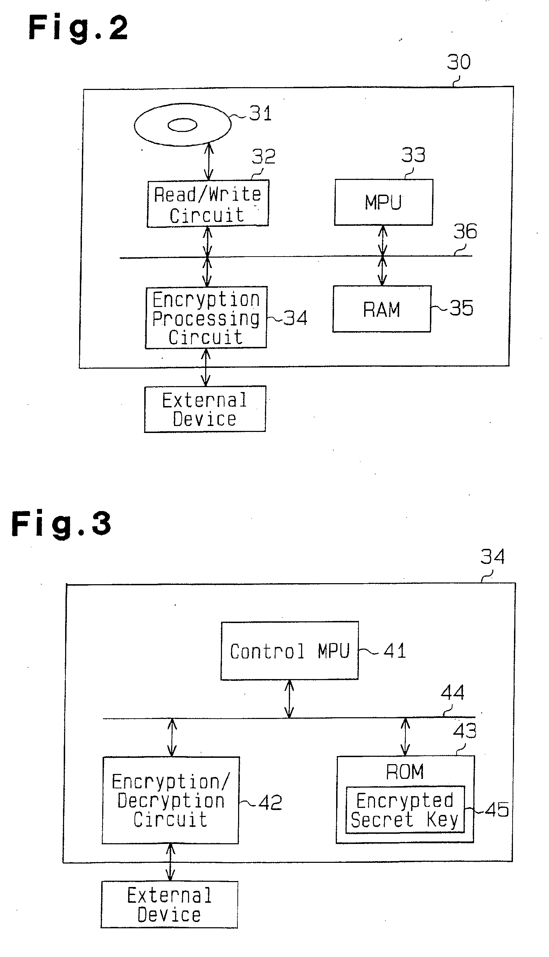

Fig. 2 is a schematic diagram illustrating an optical disc device 30 incorporating an encryption processing circuit (encryption processor) 34 according to a first embodiment of the present invention. The optical disc device 30 records data to or reproduces data from an optical disc 31, such as a DVD or a CD. The optical disc device 30 includes a read/write circuit 32, a microprocessor (MPU) 33, the encryption processing circuit 34, and a RAM 35.

The read/write circuit 32 includes a drive circuit (not shown) for driving the optical disc 31 and a pickup circuit (neither shown). The read/write circuit 32 reads data from the optical disc 31, encrypts the data, and records the encrypted data on the optical disc 31. Further, the read/write circuit 32 decrypts the data read from the optical disc 31 and outputs the decrypted data.

The encryption processing circuit 34 encrypts the output data of the read/write circuit 32 and outputs the encrypted data. The encryption processing circuit 34 decrypts data that is received from an external device and provides the read/write circuit 32 with the decrypted data.

The MPU 33 controls the entire optical disc device 30. The RAM 35 temporarily stores the data of the MPU 33, the output data of the read/write circuit 32, and the output data of the encryption processing circuit 34.

Fig. 3 is a schematic diagram illustrating the encryption processing circuit 34. The encryption processing circuit 34 includes a control MPU (process control circuit) 41, an encryption/decryption circuit 42, and a ROM 43. The ROM 43 is a rewritable non-volatile memory, such as an EEPROM. An encrypted secret key 45 is stored in the ROM 43.

The control MPU 41 executes a control program, which is stored in the control MPU 41 or the ROM 43. The control program includes a plurality of commands or a single command for transferring the encrypted secret key 45 between the ROM 43 and the encryption/decryption circuit 42. The control program further includes a command for having the encryption/decryption circuit 42 perform encryption and decryption.

The control MPU 41 transfers the encrypted secret key 45 between the ROM 43 and the encryption/decryption circuit 42. Further, the control MPU 41 provides the encryption/decryption circuit 42 with encryption and decryption commands. The transfer of the encrypted secret key 45 may be performed through a separate transfer circuit or by employing a direct memory access (DMA) transfer technique.

The encryption/decryption circuit 42 includes a non-volatile memory section and stores the encrypted secret key 45, which is transferred from the ROM 43, in the non-volatile memory section. The encryption/decryption circuit 42 decrypts the encrypted secret key 45 in response to a command from the control MPU 41 to generate a decrypted secret key, which is stored in the non-volatile memory section.

The encryption/decryption circuit 42 performs encryption and decryption on the data input from an external device and the bus 44 with the secret key. Then, the encryption/decryption circuit 42 outputs the processed data.

The decryption of the encrypted secret key 45 is performed in the encryption/decryption circuit 42. Thus, the secret key cannot be broken even when the program performed by the control MPU 41 is analyzed. Further, the encrypted secret key 45 is transferred from the ROM 43 to the encryption/decryption circuit 42. Thus, it is difficult to identify the secret key even when monitoring the bus 44.

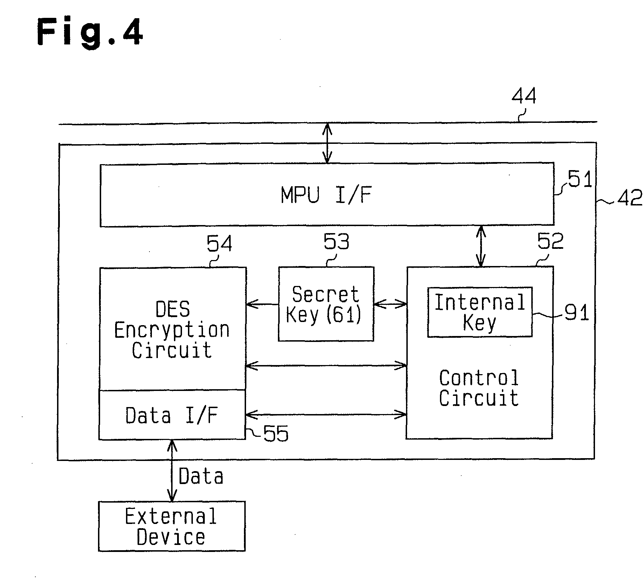

Fig. 4 is a schematic block diagram illustrating an encryption/decryption circuit 42. The encryption/decryption circuit 42 encrypts and decrypts the secret key in compliance with the Digital Encryption Standard (DES). The encryption/decryption circuit 42 includes an MPU input/output circuit (MPU I/F) 51, a control circuit 52, a register 53, which functions as a memory section, and a DES encryption circuit 54.

The MPU I/F 51, which is connected to the bus 44, transfers control information, such as encryption and decryption commands, to the encryption/decryption circuit 42. The MPU I/F 51 also transfers the secret key when the encryption processing circuit is shipped out of the factory and when the encryption processing circuit is used. The MPU I/F 51 receives status information and the encrypted secret key from the control circuit 52 and then outputs the status information and encrypted secret key to the bus 44.

The control circuit 52 controls the entire encryption/decryption circuit 42. The control circuit 52 provides the DES encryption circuit with data encryption and decryption commands, which are included in the circuit control information.

When the control circuit 52 receives a secret key 61 and data encryption command from the MPU I/F 51, the control circuit 52 encrypts the secret key 61 by means of a predetermined technique and generates the encrypted secret key 45. The encrypted secret key 45 is provided to the MPU I/F 51.

When the control circuit 52 receives the encrypted secret key 45 and a decryption command from the MPU I/F 51, the control circuit 52 decrypts the encrypted secret key 45 by means of a predetermined technique and generates the secret key 61. The secret key 61 is stored in the register 53.

More specifically, the control circuit 52 includes a predetermined internal key 91. The control circuit 52 uses the internal key 91 to decrypt the encrypted secret key 45 and generate the secret key 61. The control circuit 52 uses the internal key 91 to encrypt the secret key 61 stored in the register 53 and generate the encrypted secret key 45.

The DES encryption circuit 54 has a data interface (I/F) 55, which functions as an input/output circuit. In response to the data encryption command, the DES encryption circuit 54 uses the secret key 61 stored in the register 53 to encrypt the data input through the data I/F 55. The encrypted data is output to an external device through the data I/F 55. In response to the data decryption command, the DES encryption circuit 54 uses the secret key 61 to decrypt the data input from the data I/F 55. The decrypted data is output through the data I/F 55.

The secret key 61 and the value that is being processed are not detected from the bus 44 in the encryption/decryption circuit 42. The register 53 and the DES encryption circuit 54 are connected to the MPU I/F 51 via the control circuit 52. Accordingly, the register 53 and the DES encryption circuit 54 cannot be directly accessed from the bus 44. Thus, the decrypted secret key 61 and the data used for decryption and the generation of the encrypted secret key 45 cannot be detected from the bus 44.

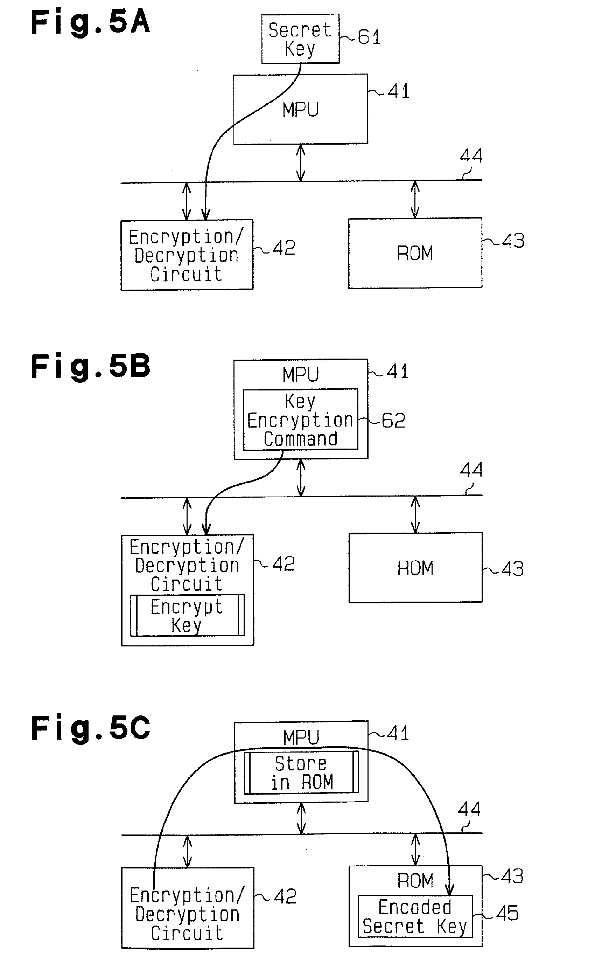

The encryption and decryption performed by the encryption processing circuit 34 will now be discussed. The encryption of the secret key 61 will first be described with reference to Figs. 5A to 5C.

Referring to Fig. 5A, the control MPU 41 receives the secret key 61, which is not encrypted, from an external device and provides the secret key 61 to the encryption/decryption circuit 42. Then, referring to Fig. 5B, in response to a command from an external device, the control MPU 41 generates a key encryption command 62 and provides the key encryption command 62 to the encryption/decryption circuit 42. The encryption/decryption circuit 42 encrypts the secret key 61 in response to the key encryption command 62 and generates the encrypted secret key 45.

Then, referring to Fig. 5C, the control MPU 41 stores the encrypted secret key 45 in the ROM 43. That is, in response to a command from an external device, the control MPU 41 reads the encrypted secret key 45 from the encryption/decryption circuit 42 and stores the encrypted secret key 45 in the ROM 43.

The encryption of the secret key 61 that is illustrated in Figs. 5A to 5C is performed before the manufactured product (optical disc device 30) is shipped out of the factory. Accordingly, a user of the optical disc device 30 would not know of the secret key 61, the key encryption command 62, and the encryption processing circuit 34.

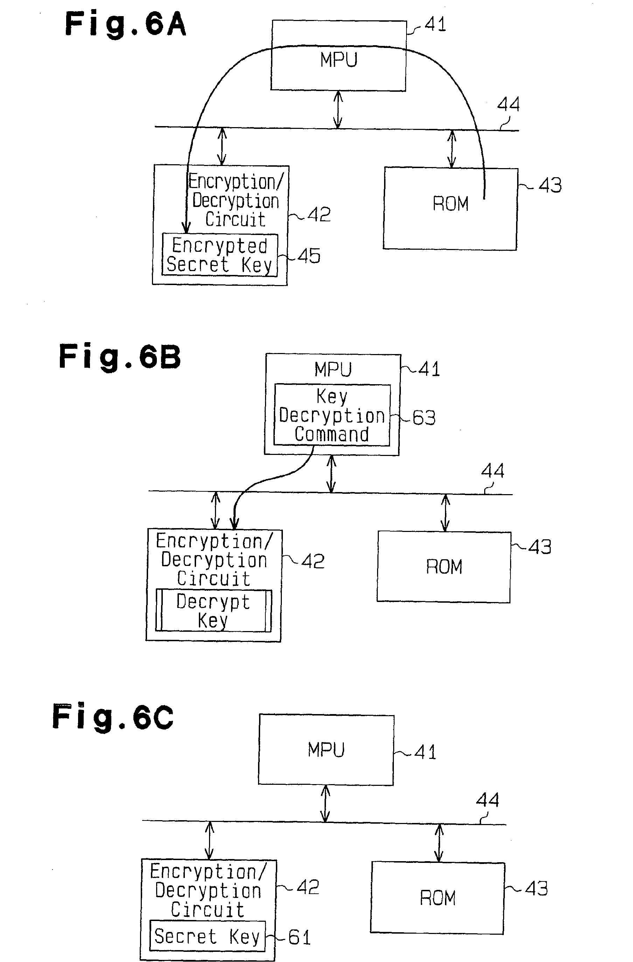

The decryption of the encoded secret key 45 will now be discussed with reference to Figs. 6A to 6C. Referring to Fig. 6A, the control MPU 41 reads the encrypted secret key 45 from the ROM 43 and provides the encrypted secret key 45 to the encryption/decryption circuit 42. Then, referring to Fig. 6B, the control MPU 41 provides the encryption/decryption circuit 42 with a key decryption command 63. The encryption/decryption circuit 42 decrypts the encrypted secret key 45 in response to the key decryption command 63 to generate the secret key 61.

The encryption processing circuit 34 of the first embodiment has the advantages described below.
(1) The encrypted secret key 45 is stored in the ROM 43 through the bus 44 and provided to the encryption/decryption circuit 42 via the bus 44. The encryption/decryption circuit 42 decrypts the encrypted secret key 45 and generates the secret key 61. That is, the encrypted secret key 45 is transferred along the bus 44. Thus, the secret key 61 cannot be broken even when monitoring the bus 44, and the secret key 61 may be used securely.
(2) The encrypted secret key 45 is stored in the rewritable ROM 43. Thus, the encrypted secret key 45 may be rewritten when necessary.
(3) The encrypted secret key 45 is stored in the ROM 43, which is connected to the encryption/decryption circuit 42. Thus, the manufacturing cost of the encryption/decryption circuit 42 is not increased.

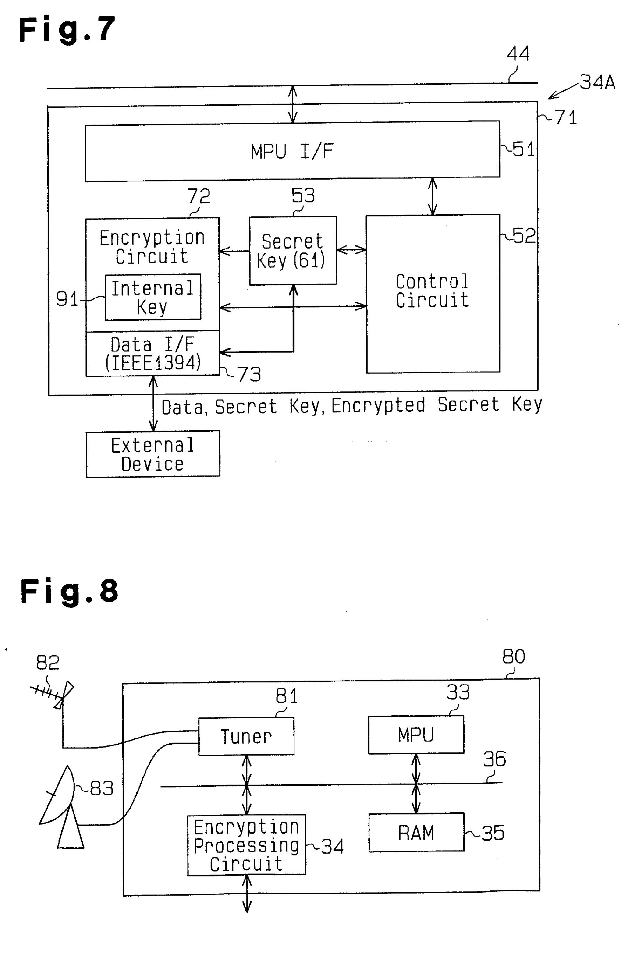

Fig. 7 is a schematic diagram illustrating an encryption/decryption circuit 71 of an encryption processing circuit 34A according to a second embodiment of the present invention. The encryption/decryption circuit 71 is used in lieu of the encryption/decryption circuit 42 in the encryption processing circuit 34 of Fig. 3.

The encryption/decryption circuit 71 performs encryption and decryption of data through a predetermined process (e.g., DES). The encryption/decryption circuit 71 includes an MPU I/F 51, a control circuit 52, a register 53, and an encryption circuit 72.

The control circuit 52 controls the entire encryption/decryption circuit 71 and provides the encryption circuit 72 with data encryption and decryption commands, which are included in circuit control information. When the control circuit 52 receives the encrypted secret key 45 and a decryption command via the MPU I/F 51, the control circuit 52 stores the encrypted secret key 45 in the register 53 and provides the decryption command to the encryption circuit 72. The encryption circuit 72 decrypts the encrypted secret key 45 with a prestored internal key 91 in response to the decryption command and generates the secret key 61, which is stored in the register 53.

When the control circuit 52 receives the encryption command from the control MPU 41, the control circuit 52 provides the encryption circuit 72 with a encryption command. The encryption circuit 72 encrypts the secret key 61, which is stored in the register 53, with the internal key 91 in response to the key encryption command and generates the encrypted secret key 45. The encrypted secret key 45 is stored in the ROM 43 via the MPU I/F 51.

The encryption circuit 72 includes a data interface (I/F) 73, which is an input/output circuit connected to an external device. The data I/F is, for example, an interface complying with the IEEE 1394 standard.

Control signals and data for controlling the encryption/decryption circuit 71 are transferred through the data I/F 73. More specifically, the encryption circuit 72 receives the secret key 61, which has not been encrypted, and a key encryption command from an external device. The encryption circuit 72 encrypts the secret key 61 with the internal key 91 in response to the key encryption command and generates the encrypted secret key 45, which is stored in the register 53. Alternatively, the encrypted secret key 45 is stored in a ROM of an external device, which uses the encryption processing circuit 34A, via the data I/F 73.

The encryption circuit 72 receives the encrypted secret key (external encrypted secret key) 45 and the key decryption command (external key decryption command) from an external device via the data I/F 73. In response to the decryption command, the encryption circuit 72 decrypts the encrypted secret key 45 in accordance with a predetermined technique and generates the secret key 61. The secret key 61 is stored in the register 53.

In response to a data encryption command, the encryption circuit 72 encrypts the data input from an external device through the data I/F 73 with the secret key 61 stored in the register 53. The encrypted data is output to the external device through the data I/F 73. In response to a data decryption command, the encryption circuit 72 decrypts the data input from the external device through the data I/F with the secret key 61, which is stored in the register 53. The decrypted data is output to the external device though the data I/F.

The encryption processing circuit 34A of the second embodiment has the advantages described below.
(1) The encrypted secret key 45 that is stored in the ROM 43 of Fig. 4 or the secret key 45 that is provided via the data I/F 73 is used to encrypt and decrypt data. Accordingly, the encrypted secret key 45 may be changed after the product is manufactured and shipped out of the factory. Thus, even in the same type of device, data may be encrypted and decrypted with different secret keys 61.
(2) The encrypted secret key 45 may be changed in accordance with the type of device connected to the data I/F 73. Thus, it is made more difficult to analyze how the secret key 61 is encrypted and how the encrypted secret key 45 is decrypted.

It should be apparent to those skilled in the art that the present invention may be embodied in many other specific forms. Particularly, it should be understood that the present invention may be embodied in the following forms.

In the first embodiment, the decryption of the encrypted secret key 45 or the encryption of the secret key 61 may be performed in the DES encryption circuit 54. In this case, the DES encryption circuit 54 includes (the code for) the key (internal key) 91, which encrypts the secret key 61 and decrypts the encrypted secret key 45. In the second embodiment, the decryption of the encrypted secret key 45 or the encryption of the decrypted secret key 61 may be performed in the control circuit 52. In this case, the control circuit 52 has the internal key 91. Thus, the encryption or decryption may be performed by either the encryption circuits 54, 72 or the control circuit 52.

In each of the above embodiments, the encryption circuits 54, 72 may perform encryption and decryption through triple DES, international data encryption algorithm (IEDA), or elliptic curve encryption.

The encryption and decryption of the secret key 61 and the encrypted secret key 45 respectively in the control circuit 52 may be performed in a manner that substantially differs from the manner in which encryption and decryption of data is performed in the encryption circuits 54, 72.

In each of the above embodiments, instead of using the internal key 91, the encryption of the secret key 61 may be performed by using a key (external key), which is provided from an external device, and an external key encryption command. In this case, the secret key 61 may be encrypted with a key that differs between products. Since the algorithm for encrypting the secret key 61 depends on the internal circuit of the encryption/decryption circuit, the external key may be designated by a user. This guarantees the security of the secret key 61.

In each of the above embodiments, the input/output interface may be an IEEE 1394, an optical input/output, or a USB.

In each of the above embodiments, the control MPU 41 may also be used as the MPU 33, which controls the entire device 30.

The present invention may be applied to a device that records data on an optical disc or a device that performs the recording and reproduction of data from an optical disc. The present invention may also be applied to a device for performing the recording and reproduction of data on other recording media (e.g., video tape, hard disk drive).

The present invention may be applied to electronic equipment for receiving data from a transmission medium, such as a receiver 80 shown in Fig. 8. The receiver 80 includes a tuner 81, an MPU 33, an encryption processing circuit 34, and a RAM 35, which are connected to each other 10 by a bus 36. The tuner 81 is connected to a ground wave antenna 82 and a BS antenna 83. Ground waves, satellite waves, such as BS and CS, a CATV coaxial cable, and an optical cable may be used as the transmission medium.

The present examples and embodiments are to be considered as illustrative and not restrictive, but rather the invention extends to all proper modifications and variations within the scope of the appended claims.

## Claims

1. An encryption device including an encryption/decryption circuit (42) for encrypting and decrypting data with a secret key (61), and a non-volatile memory (43) connected to the encryption/decryption circuit to store the secret key in an encrypted state (45), the encryption device being **characterized in that**:
the encryption/decryption circuit (42) receives the encrypted secret key (45) from the non-volatile memory (43) and decrypts the encrypted secret key (45) to generate the secret key (61).

2. The device according to claim 1, further including:
a process control circuit (41) connected to the encryption/decryption circuit (42) and the non-volatile memory (43) to control the encryption and decryption of the secret key (61);
wherein the process control circuit (41) provides the encryption/decryption circuit (42) with a key decryption command, and the encryption/decryption circuit (42) decrypts the encrypted secret key (45) in response to the key decryption command.

3. The device according to claim 1, wherein the encryption/decryption circuit (42) encrypts the secret key (61) to generate the encrypted secret key (45) and stores the generated encrypted secret key (45) in the non-volatile memory (43).

4. The device according to any preceding claim, wherein the non-volatile memory (43) is a rewritable ROM.

5. The device according to any preceding claim, wherein the encryption/decryption circuit (42) includes an internal key (91) used to encrypt the secret key (61) and decrypt the encrypted secret key (45).

6. The device according to claim 5, wherein the encryption/decryption circuit (42) includes an input/output circuit (55), receives an external key through the input/output circuit, and uses the external key to perform at least one of encryption of the secret key (61) and decryption of the encrypted secret key (45).

7. The device according to any of claims 1 to 4, wherein the encryption/decryption circuit (42) includes an input/output circuit (73), receives an external encrypted secret key and an external key decryption command through the input/output circuit, decrypts the external encrypted secret key (45) in response to the key decryption command, and generates the secret key (61).

8. An electronic device being **characterized by**:
an encryption device (34) including:
an encryption/decryption circuit (42) for encrypting and decrypting data with a secret key (61); and
a non-volatile memory (43) connected to the encryption/decryption circuit for storing the secret key in an encrypted state (45);
wherein the encryption/decryption circuit receives the encrypted secret key from the non-volatile memory and decrypts the encrypted secret key to generate the secret key.

9. The electronic device according to claim 8, wherein the encryption/decryption circuit (42) encrypts the secret key (61) to generate the encrypted secret key (45) and stores the generated encrypted secret key in the non-volatile memory (43).

10. A method for encrypting and decrypting predetermined data in an encryption device including an encryption/decryption circuit (42) and a non-volatile memory (43) for storing a secret key (61) in an encrypted state (45), the method being **characterized by** the steps of:
transferring the encrypted secret key (45) from the non-volatile memory (43) to the encryption/decryption circuit (42);
providing the encryption/decryption circuit (42) with a key decryption command;
decrypting the encrypted secret key (45) with the encryption/decryption circuit (42) in response to the key decryption command to generate the secret key (61); and
performing at least one of encryption and decryption of the predetermined data with the decrypted secret key (61).

11. The method according to claim 10, further comprising the steps of:
providing the encryption/decryption circuit (42) with the secret key (61) that is not encrypted;
providing the encryption/decryption circuit (42) with a key encryption command;
encrypting the secret key (61) with the encryption/decryption circuit (42) in response to the key encryption command to generate the encrypted secret key (45); and
storing the encrypted secret key (45) in the non-volatile memory (43).

12. The method according to claim 10 or 11, wherein the encryption/decryption circuit (42) includes an internal key (91), the method further comprising:
performing at least one of encryption of the secret key (61) and decryption of the encrypted secret key (45) with the internal key (91) in the encryption/decryption circuit (42).

13. The method according to claim 10 or 11, further comprising the steps of:
providing the encryption/decryption circuit (42) with an external key used to encrypt the secret key (61) and decrypt the encrypted secret key (45); and
performing at least one of encryption of the secret key (61) and decryption of the encrypted secret key (45) with the external key in the encryption/decryption circuit (42).

14. The method according to claim 10, further comprising the steps of:
providing the encryption/decryption circuit (42) with an external encrypted secret key and a key decryption command; and
decrypting the external encrypted secret key with the encryption/decryption circuit in response to the key decryption command to generate the secret key (61).

15. A method for processing a secret key (61) with an encryption/decryption circuit (42) and a non-volatile memory (43), wherein the secret key is used to encrypt and decrypt data, and the non-volatile memory stores the secret key in an encrypted state (45), the method being **characterized by** the steps of:
transferring the encrypted secret key (45) from the non-volatile memory (43) to the encryption/decryption circuit (42);
providing the encryption/decryption circuit (42) with a key decryption command; and
decrypting the encrypted secret key (45) with the encryption/decryption circuit (42) in response to the key decryption command to generate the secret key (61).

16. The method according to claim 15, further comprising the steps of:
providing the encryption/decryption circuit (42) with the secret key (61) that is not encrypted;
providing the encryption/decryption circuit (42) with a key encryption command;
encrypting the secret key (61) in response to the key encryption command with the encryption/decryption circuit (42) to generate the encrypted secret key (45); and
storing the encrypted secret key (45) in the non-volatile memory (43).

17. The method according to claim 15, wherein the encryption/decryption circuit (42) includes an internal key (91), the method further comprising:
performing at least one of encryption of the secret key (61) and decryption of the encrypted secret key (45) with the internal key in the encryption/decryption circuit.

18. The method according to claim 15 or 16, further comprising the steps of:
providing the encryption/decryption circuit (42) with an external key used for the encryption of the secret key (61) and the decryption of the encrypted secret key (45); and
performing at least one of the encryption of the secret key (61) and the decryption of the encrypted secret key (45) with the external key in the encryption/decryption circuit (42).

19. The method according to claim 18, further comprising the step of:
providing the encryption/decryption circuit (42) with an external key encryption command or an external key decryption command.

20. The method according to claim 15, further comprising the steps of:
providing the encryption/decryption circuit (42) with an external encrypted secret key and an external key decryption command; and
decrypting the external encrypted secret key in response to the external key decryption command with the encryption/decryption circuit (42).
